# EUROPÄISCHE PATENTSCHRIFT

(11) **EP 3 525 907 B1**
(45) Veröffentlichungstag und Bekanntmachung des Hinweises auf die Patenterteilung: **19.07.2023**
(21) Anmeldenummer: 17783720.0
(22) Anmeldetag: 09.10.2017
(51) Int. Cl.: B01D 35/147, B01D 29/23, B01D 29/54, B01D 29/64, B01D 29/68

(54) **FILTERVORRICHTUNG**
FILTER DEVICE
DISPOSITIF DE FILTRATION

(30) Priorität: 12.10.2016 DE 102016012206; 01.03.2017 DE 102017001968; 01.03.2017 DE 102017001970
(43) Veröffentlichungstag der Anmeldung: 21.08.2019
(73) Patentinhaber: Hydac Process Technology GmbH, 66538 Neunkirchen (DE)
(72) Erfinder: LINGEN, Hans-Jürgen, 41069 Mönchengladbach (DE); KLEIN, Stefan, 53902 Bad Münstereifel (DE); KLEIN, Raphael, 50226 Frechen (DE); BREINIG, Markus, 50226 Frechen (DE)
(74) Vertreter: Bartels und Partner, Patentanwälte
(86) Internationale Anmeldenummer: PCT/EP2017/001192
(87) Internationale Veröffentlichungsnummer: WO 2018/068888

(56) Entgegenhaltungen:
- EP-A1- 0 487 831
- EP-A1- 1 598 101
- WO-A1-2013/133865
- WO-A2-00/78426
- DE-A1-102007 014 573
- US-A- 3 357 566
- US-A1- 2013 200 006

## Beschreibung

Die Erfindung betrifft eine Filtervorrichtung, insbesondere für die Schmierölfiltration, bestehend aus mindestens zwei Filtereinsätzen, in denen jeweils ein Filtermaterial aufgenommen ist, die mit Fluid-Durchlassstellen versehen und unter Bildung eines Stapelverbundes aufeinander stapelbar sind, und mit einer Rückspüleinrichtung, die entlang der Innenseite der Filtereinsätze verfahrbar angeordnet ist.

Für die Betriebssicherheit und Lebensdauer von Verbrennungsmotoren ist die einwandfreie Beschaffenheit des Schmieröls von großer Bedeutung. Insbesondere stellt der Dauerbetrieb von Dieselmotoren, die beispielsweise bei maritimen Anwendungen mit Schweröl betrieben sind, besonders hohe Anforderungen an die Beschaffenheit des Schmieröls, so dass bei solchen Anwendungen der Einsatz von Filtervorrichtungen zur Schmierölreinigung unerlässlich ist. Diesbezüglich ist es Stand der Technik, Filtervorrichtungen zu benutzen, bei denen Filtereinsätze rückspülbar sind, um längere Laufzeiten zwischen dem Wechsel von Filtereinsätzen zu ermöglichen und dadurch Wartungskosten gering zu halten. Als Beispiel für den diesbezüglichen Stand der Technik zeigt das Dokument DE 20 2016 003 089 U eine Filtervorrichtung der oben genannten Gattung.

Weitere Filtervorrichtungen gehen aus der US 3 357 566, der US 2013/ 0200006 A1, der EP 0 487 831 A1, der EP 1 598 101 A1, der WO 00/ 78426 A2, der DE 10 2007 014 573 A1 und der WO 2013/133865 A1 hervor.

Ausgehend von diesem Stand der Technik stellt sich die Erfindung die Aufgabe, eine Filtervorrichtung der genannten Art zur Verfügung zu stellen, die besonders einfach und kostengünstig herstellbar ist.

Erfindungsgemäß ist diese Aufgabe durch eine Filtervorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die einzelnen Filtereinsätze zumindest von ihrem Gehäuse her als Gleichteile ausgebildet sind; dass das Gehäuse der Filtereinsätze an jeder freien Stirnseite einen Ringkörper aufweist; dass die Ringkörper der Gehäuse der Filtereinsätze über innere und äußere, längsverlaufende Rahmenteile miteinander verbunden sind, die zwischen sich fensterartige Fluid-Durchlassstellen begrenzen; und dass im Raum zwischen inneren und äußeren Rahmenteilen das Filtermaterial aufgenommen ist. Durch Spritzgießen, insbesondere aus Kunststoffmaterialien, lassen sich Gleichteile durch Wegfall des Aufwandes für verschiedene Formwerkzeuge auf rationelle Weise mit geringen Fertigungskosten herstellen. Dies führt zu geringen Gestehungskosten für die Filtervorrichtung und zu verringerten Wartungskosten in Verbindung mit Filterwechseln und damit zu günstigen Gesamt-Betriebskosten. Als Gehäusewerkstoffe können kostengünstige Kunststoffmaterialien, beispielsweise Polyamide, eingesetzt werden, beispielsweise PA6, gegebenenfalls mit einer ölfesten Beschichtung.

Mit Vorteil kann am Ringkörper auf der einen freien Stirnseite eines Filtereinsatzes mindestens eine vorstehende Ringrippe vorhanden sein, die in eine zugehörige ringförmige Ausnehmung im Ringkörper an der anderen Stirnseite eines nachfolgenden Filtereinsatzes unter Bildung des Stapelverbundes eingreift. Mit geringen Montagekosten lässt sich dadurch der Stapelverbund in Form eines einteiligen Bauteils aus Filtereinsätzen ausbilden, weil der Eingriff der jeweiligen Ringrippe in die korrespondierende Ausnehmung ohne besonderes Zutun die gegenseitige Zentrierung der Filtereinsätze sicherstellt. Zudem lässt sich die Verbindung der Filtereinsätze miteinander auf einfache Weise durch Verkleben durchführen, indem der Klebstoff vor dem Zusammensetzen der Filtereinsätze in die jeweilige Ausnehmung eingebracht wird, beispielsweise in Form eines Zweikomponenten-Klebers.

Bei vorteilhaften Ausführungsbeispielen ist die jeweilige Ringrippe durch mindestens eine eine Lücke bildende Unterbrechung in Rippenteile unterteilt, wobei in dem im Stapelverbund nachfolgenden Filtereinsatz in der ringförmigen Ausnehmung mindestens ein in eine Lücke der Ringrippe eingreifender Vorsprung vorgesehen ist. Neben der gegenseitigen Zentrierung ist dadurch auch eine formschlüssige Verdrehsicherung zwischen den Filtereinsätzen ausgebildet. Insbesondere kann die Anordnung hierbei so getroffen sein, dass jeder Filtereinsatz an seiner einen freien Stirnseite die jeweilige Ringrippe mit der zumindest einen dazwischenliegenden Lücke und an seiner anderen freien Stirnseite korrespondierend die jeweilige ringförmige Ausnehmung mit jeweils darin befindlichem Vorsprung aufweist.

Bei besonders vorteilhaften Ausführungsbeispielen weisen die voneinander abgewandten Stirnseiten der im Stapelverbund angeordneten Filtereinsätze jeweils ein Deckelteil auf, die als Gleichteile ausgebildet sind. Auch diese lassen sich aus dem genannten Kunststoffwerkstoff durch Spritzgießen rationell und bei der Ausbildung als Gleichteile mit geringen Formwerkzeugkosten herstellen.

Mit Vorteil ist zumindest ein Teil der Deckelteile fluiddurchlässig, so dass für den Filtrationsvorgang der Strömungsweg ins Innere der Filtereinsätze freigehalten ist.

Bei letzterem handelt es sich vorzugsweise um eine ein- oder mehrlagige, plissierte Filtermattenbahn mit an beiden Seiten außen liegendem metallischem Stützgitter. Über die Fluid-Durchlassstellen ist das Filtermedium beim Filtrationsvorgang vorzugsweise von der Innenseite zur Außenseite hin durchströmt.

Die Rückspüleinrichtung weist für jeden Filtereinsatz einen motorisch antreibbaren Rückspülarm auf, der in der Art einer Schlitzdüse ausgebildet entlang der an den inneren Rahmenteilen ausgebildeten Fluid-Durchlassstellen mittels einer Antriebswelle verfährt, die hohl ausgebildet der Abfuhr von Rückspülmengen aus der Vorrichtung dient. An der Hohlwelle kann der Umgebungsdruck herrschen, so dass der Betriebs-Systemdruck der Filtervorrichtung den Volumenstrom der Rückspülmenge erzeugt, oder in der Hohlwelle kann ein Unterdruck mittels einer angeschlossenen Saugeinrichtung wirksam sein.

Bei besonders vorteilhaften Ausführungsbeispielen sind die einzelnen Schlitzdüsen der Rückspülarme derart axial und um einen Drehwinkel zueinander versetzt, dass zumindest eine Schlitzdüse über einer fensterartigen Fluid-Durchlassstelle gelegen ist und zumindest eine weitere, vorzugsweise benachbart angeordnete Schlitzdüse gleichzeitig über einem Rahmenteil neben einer anderen Durchlassstelle steht. Bei dieser Anordnung geht die Freigabe eines jeweiligen Durchlassfensters durch einen Spülarm mit dem Schließen jeweils eines anderen Durchlassfensters durch den anderen Spülarm einher und umgekehrt, so dass die Entwicklung von Pulsationen in der Rückspülmenge minimiert ist.

Die benachbarten inneren Längsrahmenteile können gegenüber der Radialrichtung eine Schrägstellung aufweisen, so dass sie für jedes Durchlassfenster eines jeden Filtereinsatzes eine Strömungsrichtung vorgeben, die um einen vorgebbaren Winkel gegenüber der Einströmrichtung der Öffnung der jeweiligen Schlitzdüse geneigt ist. Dies führt zu einem die Ablösung von Verschmutzungen begünstigenden schrägen Strömungsverlauf durch das Filtermedium.

Mit Vorteil kann die Anordnung ferner so getroffen sein, dass die jeweilige Schlitzdüse sich ausgehend von der Innenseite des ihr zuordenbaren Filtereinsatzes in Richtung der hohlen Antriebswelle erweitert. Durch den demgegenüber verjüngten Strömungsquerschnitt an der Schlitzdüse selbst ergibt sich ein Venturi-Effekt mit lokal erhöhter Strömungsgeschwindigkeit im wirksamen Bereich des Spülarms, was zu einer erhöhten Rückspülwirkung bei reduzierter Spülmenge führt.

Bei besonders vorteilhaften Ausführungsbeispielen besteht der Rückspülarm für jeden Filtereinsatz aus gleichen Bauteilen, die stirnseitig mit einer Nut-Feder-Verbindung, vergleichbar derjenigen bei den Filtereinsätzen, verbunden sind. Die Gestaltung als Gleichteile ermöglicht günstige Herstellkosten der Gesamtvorrichtung.

Als weiterer Filtereinsatz im Lagenverbund kann ein solcher mit mindestens einem federbelasteten Bypassventil zum Einsatz kommen, so dass die Gefahr einer Unterbrechung der Schmierölversorgung bei Verblockung von Filtereinsätzen vermieden ist.

Bei Ausführungsbeispielen, bei denen zumindest alle Filtereinsätze unter Bildung des Lagenverbundes an ihren einander benachbarten Stirnseiten miteinander verklebt sind und dadurch unlösbar miteinander verbunden sind, lässt sich der Lagenverbund als Gesamtpaket einsetzen und austauschen. Dabei kann der Lagenverbund mit den Filtereinsätzen in einem Filtergehäuse auswechselbar aufnehmbar sein, das einen Fluideingang für Unfiltrat, einen Fluidauslass für Filtrat und einen Auslass für die Rückspülmenge aufweist.

Nachstehend ist die Erfindung anhand von in der Zeichnung dargestellten Ausführungsbeispielen im Einzelnen erläutert. Es zeigen:
- Fig. 1: einen zentralen Längsschnitt eines Ausführungsbeispiels der erfindungsgemäßen Filtervorrichtung;
- Fig. 2: eine gegenüber Fig. 1 in größerem Maßstab und entlang einer zentralen Zentralebene aufgeschnitten gezeichnete perspektivische Schrägansicht der Rückspülfilter-Baueinheit des Ausführungsbeispiels von Fig. 1;
- Fig. 3: eine perspektivische Schrägansicht eines gesondert dargestellten Filtereinsatzes der Baueinheit, gesehen auf die Oberseite;
- Fig. 4: eine der Fig. 3 entsprechende Darstellung des Filtereinsatzes, gesehen auf die Unterseite;
- Fig. 5: einen vergrößert gezeichneten Teilquerschnitt des an die Schlitzdüse eines Spülarms angrenzenden Bereichs eines Filtereinsatzes, wobei die Schlitzdüse in einer auf ein inneres Längsrahmenteil des Filtereinsatzes ausgerichteten Position gezeigt ist;
- Fig. 6: einen der Fig. 5 entsprechenden Teilquerschnitt, wobei die Schlitzdüse auf eine Fluid-Durchlassstelle zwischen inneren Längsrahmenteilen ausgerichtet ist; und
- Fig. 7: einen zentralen Längsschnitt eines zweiten Ausführungsbeispiels der erfindungsgemäßen Filtervorrichtung.

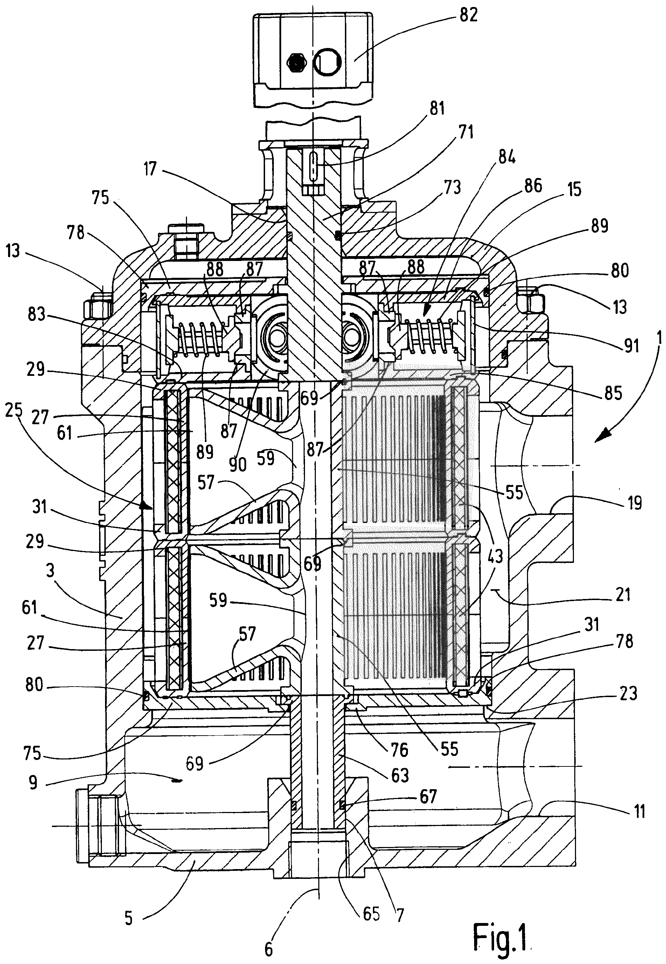

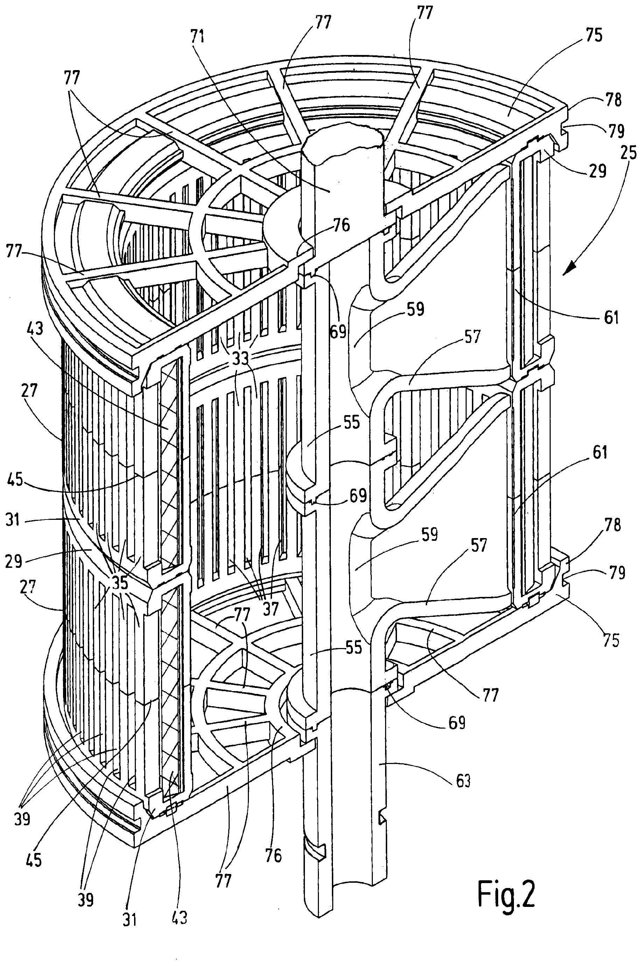

Die Fig. 1 zeigt ein Ausführungsbeispiel der erfindungsgemäßen Filtervorrichtung mit einem als Ganzes mit 1 bezeichneten Filtergehäuse, das ein Gehäusehauptteil 3 in Form eines Topfes besitzt, an dessen Boden 5 sich eine zu einer zentralen Gehäuselängsachse 6 koaxiale Lagerstelle 7 befindet. Als Zugang zum an den Boden 5 angrenzenden Gehäuseraum 9 ist ein seitlicher Einlass 11 für die Zufuhr von Unfiltrat vorgesehen, so dass der Gehäuseraum 9 die Schmutzseite bildet. An der Oberseite ist das Gehäusehauptteil 3 durch einen mittels Halteschrauben 13 abnehmbar angebrachten Gehäusedeckel 15 geschlossen, in dem, wie im Boden 5, eine zur Achse 6 koaxiale Lagerstelle 17 gebildet ist. Im Gehäusehauptteil 3 ist in der Nähe des Gehäusedeckels 15 ein Filtratauslass 19 vorgesehen, der in zum Einlass 11 fluchtender Position angeordnet ist und über den Filtrat aus dem angrenzenden Gehäuseraum 21 ausströmt, der im Betrieb die Reinseite bildet. Im Gehäusehauptteil 3 ist oberhalb eines eine Stufe bildenden Wandabsatzes 23, der sich in der Nähe des Unfiltrateinlasses 11 befindet, eine als Ganzes mit 25 bezeichnete Rückspülfilter-Baueinheit angeordnet, die in Fig. 2 gesondert dargestellt ist.

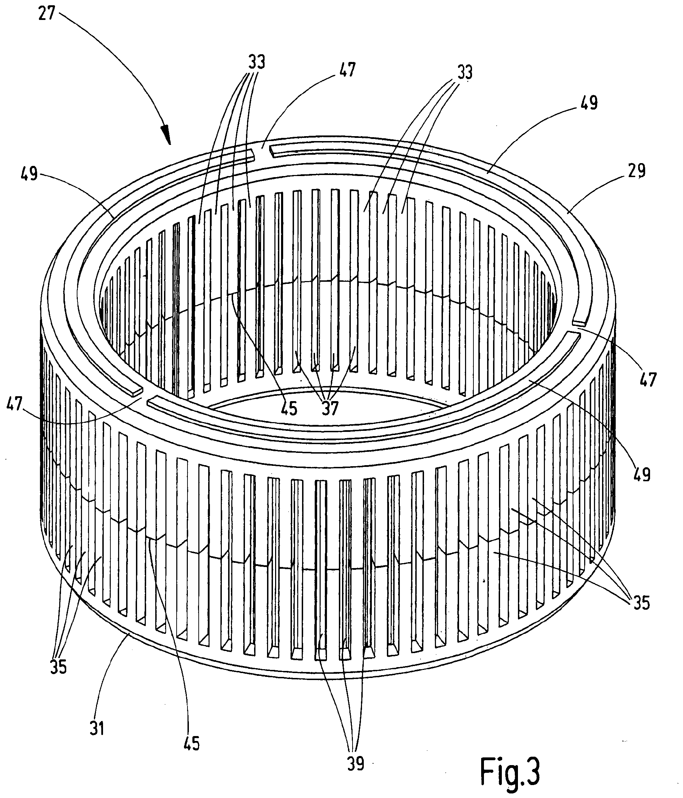

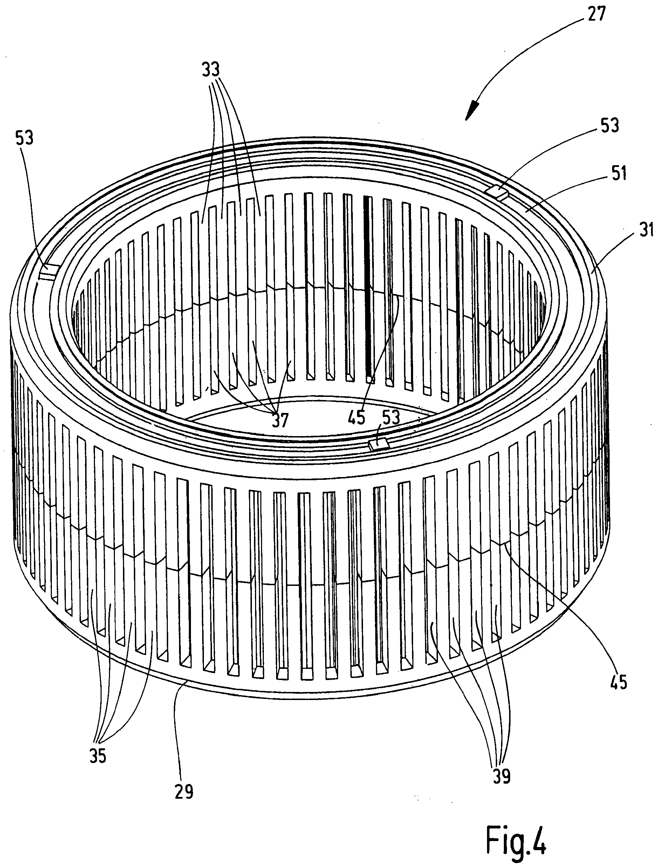

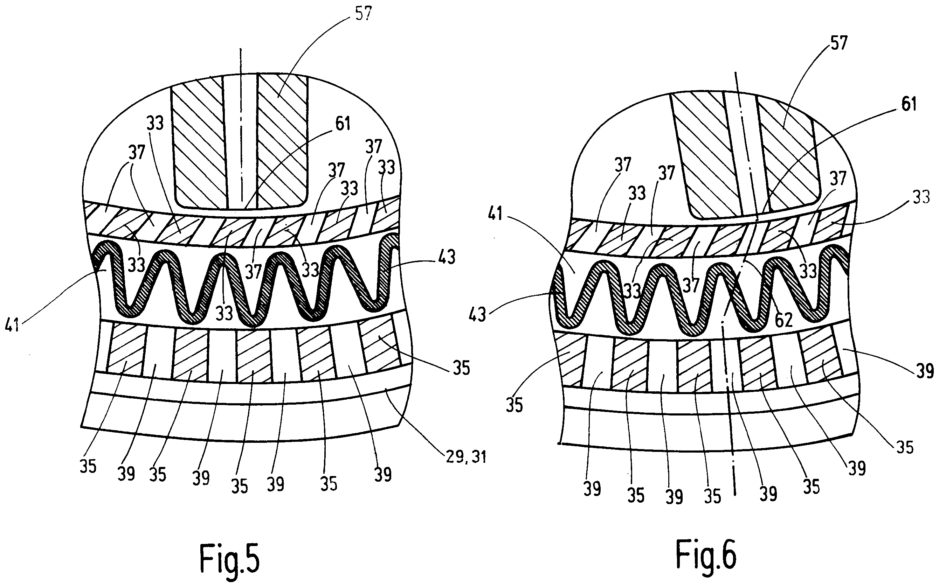

Die Baueinheit 25 weist einen Stapelverbund aus Filtereinsätzen auf. Beim gezeigten Ausführungsbeispiel sind zwei Filtereinsätze 27 vorgesehen, die als Gleichteile ausgebildet und in den Fig. 3 und 4 in Einzeldarstellung gezeigt sind. Das kreiszylindrische Gehäuse der Filtereinsätze 27 weist an jeder freien Stirnseite einen ersten Ringkörper 29 und einen zweiten Ringkörper 31 auf, von denen in Fig. 3 der erste Ringkörper 29 oben und in Fig. 4 der zweite Ringkörper 31 oben sichtbar ist. Zwischen den Ringkörpern 29, 31 erstrecken sich ein Kranz innerer Rahmenteile 33 und ein Kranz äußerer Rahmenteile 35, die, der Übersichtlichkeit wegen, in den Figuren nicht sämtliche beziffert sind. Die Rahmenteile 33 und 35 verlaufen in regelmäßigen Abständen voneinander parallel zur Achse 6 des kreiszylindrischen Gehäuses und lassen zwischen sich innere Fluid-Durchlassstellen 37 und äußere Fluid-Durchlassstellen 39 frei, die schlitzförmig zwischen den Rahmenteilen 33, 35 durchgehend verlaufen und ebenfalls nur teilweise beziffert sind. Im Raum 41, s. Fig. 5 und 6, befindet sich das Filtermedium 43. Dieses besteht aus einer plissierten Filtermattenbahn aus zumindest einer Filterlage, an deren beiden Außenseiten sich je eine Stützlage in Form einer Gitterstruktur befindet. Bei vorteilhaften Beispielen liegt die Filterfeinheit im Bereich von 25 bis 34 *µ*m. Die äußeren und inneren Rahmenteile 33 und 35 erstrecken sich von den Ringkörpern 29, 31 weg jeweils über die halbe axiale Länge des Gehäuses. Bei dessen Zusammenbau wird das Filtermedium 43 in den Raum 41 einer Gehäusehälfte eingelegt, wonach die Gehäusehälften zusammengesetzt und die Rahmenteile 33 und 35 an der jeweiligen Stoßstelle 45 stumpf miteinander durch Schweißen oder Kleben verbunden werden.

Die Filtereinsätze 27 weisen, wie am deutlichsten die Fig. 3 und 4 zeigen, am ersten Ringkörper 29 stirnseitig eine zur Zylinderachse konzentrische und axial mit rechteckförmigem Querschnitt vorstehende Ringrippe auf, die durch drei Unterbrechungen, die je eine gleich lange Lücke 47 bilden, in drei ebenfalls gleich lange Ringrippenteile 49 unterteilt ist. Auf der gegenüberliegenden Stirnseite ist im zweiten Ringkörper 31, der in Fig. 4 obenliegend sichtbar ist, eine zu den Ringrippenteilen 49 komplementäre Ausnehmung 51 in Form einer vertieften Ringnut ausgebildet, in der, korrespondierend zu den zwischen den Ringrippenteilen 49 des anderen Ringkörpers 29 befindlichen Lücken 47, Vorsprünge 53 ausgebildet sind. Beim Zusammensetzen der Filtereinsätze 27 zur Bildung eines Stapelverbundes ergibt sich dadurch ein formschlüssiger, passender Eingriff der Ringrippenteile 49 in die Ausnehmung 51 des Ringkörpers 31, bei gleichzeitigem Eingriff der Vorsprünge 53 in die Lücken 47 am Ringkörper 29. Die Filtereinsätze 27 sind dadurch nicht nur miteinander zentriert, sondern auch gegen Verdrehen gesichert. Die Filtereinsätze 27 lassen sich zur Bildung eines unlösbaren Verbundes auf einfache Weise miteinander verbinden, indem vor dem Zusammenfügen ein Klebstoff, vorzugsweise ein Zweikomponenten-Kleber, in die Ausnehmung 51 eingebracht wird.

Die Fig. 2 zeigt die mit einem Stapelverbund aus zwei Filtereinsätzen 27 gebildete Rückspülfilter-Baueinheit 25. Wie gezeigt, weist jeder Filtereinsatz 27 eine innere Rückspüleinrichtung auf, mit einer koaxialen Hohlwelle 55, an der sich ein Spülarm 57 befindet. Diese erstrecken sich von der Hohlwelle 55 radial bis zur unmittelbaren Nähe des Innenumfangs der inneren Rahmenteile 33, s. Fig. 5 und 6, und bilden, von einer Einmündungsstelle 59 an der Hohlwelle 55 ausgehend, einen schmalen Fluidweg, der in einer Schlitzdüse 61 endet, s. Fig. 5 und 6. Die Schlitzdüsen 61 erstrecken sich über die gesamte axiale Länge der inneren Fluid-Durchlassstellen 37. An die Hohlwelle 55 des untersten Spülarms 57 schließt sich ein Hohlwellenendteil 63 an, das zum Rückspülausgang 65 am Boden 5 des Filtergehäuses 1 führt, wo das Hohlwellenendteil 63 bei in das Filtergehäuse 1 eingebauter Baueinheit 25 in der Lagerstelle 7 drehbar gelagert und dort mittels eines Wellenringes 67 abgedichtet ist. Über eine Nut-Feder-Verbindung 69 (Fig. 2) ist das Hohlwellenendteil 63 mit dem Ende der angrenzenden Hohlwelle 55 verbunden. An das obere Ende der Hohlwelle 55 des obersten Spülarms 57 schließt sich ein Antriebswellenteil 71 an, das mit der Hohlwelle 55 ebenfalls über eine Nut-Feder-Verbindung 69 (Fig. 2) drehfest verbunden ist. Bei in das Filtergehäuse 1 eingebauter Baueinheit 25 ist das Antriebswellenteil 71 in der Lagerstelle 17 des Gehäusedeckels 15 drehbar gelagert, wobei ebenfalls ein Wellenring 73 zur Abdichtung vorgesehen ist. Als oberer und unterer Abschluss des Stapelverbundes der Filtereinsätze 27 ist jeweils ein Deckelteil 75 vorgesehen, die als Gleichteile aus Kunststoff spritzgegossen und nach dem Einsetzen der Rückspüleinrichtung samt Hohlwellenendteil 63 und Antriebswellenteil 71 mit dem jeweils zugewandten Ringkörper 29, 31 verklebt sind. Die Deckelteile 75 weisen, von einer inneren Nabe 76 ausgehend und zu einem am Deckelumfang befindlichen Außenring 78 verlaufend, speichenartige Stege 77 auf, die zwischen sich Fluiddurchgänge freilassen. In jedem Außenring 78 ist eine Ringnut 79 für einen Dichtring 80 gebildet.

Die Fig. 1 zeigt das erste Ausführungsbeispiel mit in das Filtergehäuse 1 eingebauter Rückspülfilter-Baueinheit 25 mit dem aus zwei Filtereinsätzen 27 gebildeten Stapelverbund. Für den Antrieb der Rückspülarme 57 ist ein elektrisch oder hydraulisch betätigter Getriebemotor 82 mit dem Antriebswellenteil 71 über ein an diesem befindliches Kupplungsteil 81 verbunden. Bei dem Ausführungsbeispiel von Fig. 1 ist zusätzlich zu der Rückspülfilter-Baueinheit 25 mit dem aus den zwei Filtereinsätzen 27 gebildeten Stapelverbund ein mit einem weiteren Filtereinsatz 83 gebildeter Stapelverbund vorgesehen. Dieser Filtereinsatz 83 enthält eine Bypasseinrichtung 84. Das Gehäuse dieses Filtereinsatzes 83 weist an seinen beiden Stirnseiten eine untere Ringscheibe 85 und eine obere Ringscheibe 86 auf, von denen die untere Ringscheibe 85 zur Bildung des um den Filtereinsatz 83 erweiterten Stapelverbundes an dem oberen Ringkörper 29 des angrenzenden Filtereinsatzes 27 mit gleicher Nut-Feder-Verbindung angebracht ist, wie sie zwischen den Filtereinsätzen 27 vorgesehen ist. Anders als in Fig. 2 gezeigt ist daher das Deckelteil 75 an der oberen Ringscheibe 86 des Bypass-Filtereinsatzes 83 angebracht. An den radial innenliegenden Enden der Ringscheiben 85, 86, die von dem Antriebswellenteil 71 einen radialen Abstand aufweisen, befinden sich jeweils axial in Richtung zueinander vorspringende Ansätze 87, die den Ventilsitz für Schließkörper 88 eines Kranzes von Bypassventilen bilden, die durch Federn 89 in die Schließstellung vorgespannt sind. Ein den Außenumfang des Bypass-Filtereinsatzes 83 bildendes und sich zwischen unterer und oberer Ringscheibe 85, 86 erstreckendes Filtermaterial 91 bildet ein Schutzsieb bei Ansprechen der Bypasseinrichtung 84.

Im Betrieb strömt das über den Einlass 11 zugeführte Unfiltrat über die Durchgänge zwischen den Stegen 77 des unteren Deckelteils 75 in den Innenraum der Filtereinsätze 27 ein, durchströmt beim Filtervorgang das Filtermedium 43 zum Filtratraum 21 hin und tritt über den Auslass 19 aus. Die Abdichtung zwischen der Schmutzseite, also dem Unfiltratraum 9 am Boden 5, dem Innenraum der Filtereinsätze 27 sowie der damit verbundenen zentralen Kammer 90 des Bypass-Filtereinsatzes 83, und der Reinseite, das heißt dem Raum 21, ist durch die Dichtringe 80 am unteren Deckelteil 75 und am oberen Deckelteil 75 gebildet. Bei der Rückspülung, die bei mittels einer (nicht gezeigten) Ventileinrichtung geöffnetem Rückspülausgang 65 erfolgt, bewegen sich die Schlitzdüsen 61 der Rückspülarme 57 in engem Abstand entlang der inneren Rahmenteile 33 der Filtereinsätze 27, s. Fig. 5 und 6, in denen in Fig. 5 der eine Spülarm 57 und in Fig. 6 der andere der beiden Spülarme 57 in der zum gleichen Zeitpunkt eingenommenen Position gezeigt ist. Wie aus diesen Figuren ersichtlich ist, ist die Öffnung der einen Schlitzdüse 61 auf ein inneres Rahmenteil 33 ausgerichtet, wenn die Schlitzdüse 61 des anderen Spülarms 57 auf eine innere Fluid-Durchlassstelle 37 ausgerichtet ist. Bei dieser Anordnung verläuft der Rückspülvorgang im Wesentlichen kontinuierlich, d.h. ohne wesentliche Pulsationen der Rückspülmenge. Gleichzeitig ist der Volumenstrom der Rückspülmenge entsprechend begrenzt, da zu jedem Zeitpunkt der volle Durchlassquerschnitt nur einer Fluid-Durchlassstelle 37 zur Verfügung steht. Wie Fig. 5 und 6 ferner zeigen, weisen die inneren Rahmenteile 37 gegenüber der Radialrichtung eine Schrägstellung auf, so dass die Strömungsrichtung der Durchströmung der Durchlassstellen 37 gegenüber der Strömungsrichtung an der Öffnung der Schlitzdüse 61 geneigt ist. Dadurch ergibt sich im Raum 41 beim Rückspülvorgang eine Strömungsrichtung, wie sie in Fig. 6 mit strichpunktierter Linie 62 angedeutet ist, bei der die Falten des Filtermediums 43 an den Breitseiten durchströmt sind, so dass die Abreinigung beim Rückspülvorgang begünstigt ist. Dabei entsteht der Volumenstrom der Rückspülmenge durch den Betriebsdruck des Systems, beispielsweise einem Öldruck im Bereich von 8 bis 10 bar bei einem Schmierölsystem. Zusätzlich kann der Rückspülvorgang durch Erzeugen eines Unterdrucks am Rückspülausgang 65 unterstützt sein. Der Fluidweg innerhalb der Rückspülarme 57 erweitert sich gegenüber dem Öffnungsquerschnitt an der Schlitzdüse 61, was zu einer Art Venturi-Effekt führt und die Strömungsgeschwindigkeit im unmittelbaren Bereich der Schlitzdüse 61 erhöht ist, was die Ablösung von Verschmutzungen begünstigt. Bei einem Verblocken des Filtermediums 43 der Filtereinsätze 27 und einem Ansprechen der Bypasseinrichtung gelangt Fluid über ein einen umfänglichen Zylindermantel zwischen unterer Ringscheibe 85 und oberer Ringscheibe 86 bildendes, als Schutzsieb dienendes Filtermaterial 91 zum Filtratraum 21 und damit zum Auslass 19.

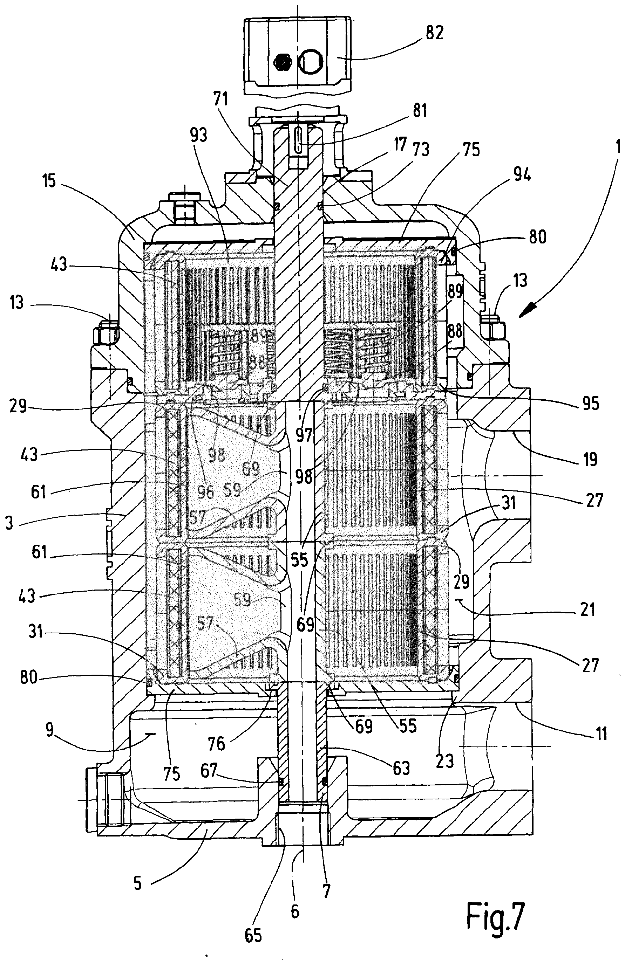

Das zweite Ausführungsbeispiel von Fig. 7 unterscheidet sich vom ersten Ausführungsbeispiel lediglich durch einen anderen Aufbau eines zusätzlichen Bypass-Filtereinsatzes 93. In ähnlicher Weise wie bei den Filtereinsätzen 27 weist der Bypass-Filtereinsatz 93 ein Gehäuse mit einem oberen, stirnseitigen Ringkörper 94 auf, an dem das Deckelteil 75 angebracht ist. Zwischen inneren und äußeren Rahmenteilen ist, wie bei den Filtereinsätzen 27, das Filtermedium 43 hohlzylinderförmig angeordnet, wobei die Filterfeinheit für dieses als Schutzfilter dienende Filtermedium 43 gröber als bei den Filtereinsätzen 27 ist und bis 100 *µ*m beträgt. Zur Bildung des Stapelverbundes mit dem Ringkörper 29 des darunterliegenden Filtereinsatzes 27 ist am unteren Ringkörper 95 des Bypass-Filtereinsatzes 93 eine Lochscheibe 96 befestigt. Diese ist durch einen Dichtring 97 am Antriebswellenteil 71 abgedichtet und weist Durchgänge 98 auf, an denen Ventilsitze für die Schließkörper 88 eines Kranzes von stehend angeordneten Bypassventilen gebildet sind. Bei verblocktem Filtermedium 43 der Filtereinsätze 27 und dadurch geöffneten Schließkörpern 88 gelangt über die Durchgänge 98 Unfiltrat in den Innenraum des Bypass-Filtereinsatzes 93, tritt über das Filtermedium 43 des Schutzfilters aus und gelangt über den Raum 21 zum Auslass 19. Das Filtermedium 43 der Filtereinsätze 27 kann zusätzlich zu der zwischen den äußeren Stützlagen befindlichen Filterlage auch eine Koaleszerlage aufweisen.

## Patentansprüche

1. Filtervorrichtung, insbesondere für die Schmierölfiltration, bestehend aus mindestens zwei Filtereinsätzen (27), in denen jeweils ein Filtermaterial (43) aufgenommen ist, die mit Fluid-Durchlassstellen (37, 39) versehen und unter Bildung eines Stapelverbundes aufeinander stapelbar sind, und mit einer Rückspüleinrichtung (55, 57), die entlang der Innenseite der Filtereinsätze (27) verfahrbar angeordnet ist,
**dadurch gekennzeichnet,**
**dass** die einzelnen Filtereinsätze (27) zumindest von ihrem Gehäuse her als Gleichteile ausgebildet sind;
**dass** das Gehäuse der Filtereinsätze (27) an jeder freien Stirnseite einen Ringkörper (29, 31) aufweist;
**dass** die Ringkörper (29, 31) der Gehäuse der Filtereinsätze (27) über innere und äußere, längsverlaufende Rahmenteile (33, 35) miteinander verbunden sind, die zwischen sich fensterartige Fluid-Durchlassstellen (37, 39) begrenzen; und
**dass** im Raum (41) zwischen inneren (33) und äußeren Rahmenteilen (35) das Filtermaterial (43) aufgenommen ist.

2. Filtervorrichtung nach Anspruch 1, **dadurch gekennzeichnet, dass** am Ringkörper (29) auf der einen freien Stirnseite eines Filtereinsatzes (27) mindestens eine vorstehende Ringrippe (49) vorhanden ist, die in eine zugehörige ringförmige Ausnehmung (51) im Ringkörper (31) an der anderen Stirnseite eines nachfolgenden Filtereinsatzes (27) unter Bildung des Stapelverbundes eingreift.

3. Filtervorrichtung nach Anspruch 2, **dadurch gekennzeichnet, dass** die jeweilige Ringrippe durch mindestens eine eine Lücke (47) bildende Unterbrechung in Rippenteile (49) unterteilt ist und dass in dem im Stapelverbund nachfolgenden Filtereinsatz (27) in der ringförmigen Ausnehmung (51) mindestens ein in eine Lücke (47) der Ringrippe (49) eingreifender Vorsprung (53) vorgesehen ist.

4. Filtervorrichtung nach einem der vorstehenden Ansprüche, **dadurch gekennzeichnet, dass** die voneinander abgewandten Stirnseiten der im Stapelverbund angeordneten Filtereinsätze (27) jeweils ein Deckelteil (75) aufweisen, die als Gleichteile ausgebildet sind.

5. Filtervorrichtung nach Anspruch 4, **dadurch gekennzeichnet, dass** zumindest ein Teil der Deckelteile (75) fluiddurchlässig gehalten ist.

6. Filtervorrichtung nach einem der vorstehenden Ansprüche, **dadurch gekennzeichnet, dass** die Rückspüleinrichtung für jeden Filtereinsatz (27) einen motorisch antreibbaren Rückspülarm (57) aufweist, der in der Art einer Schlitzdüse (61) ausgebildet entlang der an den inneren Rahmenteilen (33) ausgebildeten Fluid-Durchlassstellen (37) mittels einer Antriebswelle (55) verfährt, die hohl ausgebildet der Abfuhr von Rückspülmengen aus der Vorrichtung dient.

7. Filtervorrichtung nach Anspruch 6, **dadurch gekennzeichnet, dass** die einzelnen Schlitzdüsen (61) derart axial und um einen Drehwinkel zueinander versetzt sind, dass zumindest eine Schlitzdüse (61) über einer fensterartigen Fluid-Durchlassstelle (37) gelegen ist und zumindest eine weitere, vorzugsweise benachbart angeordnete Schlitzdüse (61) gleichzeitig über einem Rahmenteil (33) neben einer anderen Durchlassstelle (37) steht.

8. Filtervorrichtung nach Anspruch 7, **dadurch gekennzeichnet, dass** die benachbarten inneren Längsrahmenteile (33) gegenüber der Radialrichtung eine Schrägstellung aufweisen, so dass sie für jede Durchlassstelle (37) eines jeden Filtereinsatzes (27) eine Strömungsrichtung vorgeben, die um einen vorgebbaren Winkel gegenüber der Einströmrichtung der Öffnung der jeweiligen Schlitzdüse (61) geneigt ist.

9. Filtervorrichtung nach Anspruch 7 oder 8, **dadurch gekennzeichnet, dass** die jeweilige Schlitzdüse (61) sich, ausgehend von der Innenseite des ihr zuordenbaren Filtereinsatzes (27), in Richtung der hohlen Antriebswelle (55) erweitert.

10. Filtervorrichtung nach einem der Ansprüche 6 bis 9, **dadurch gekennzeichnet, dass** der Rückspülarm (57) für jeden Filtereinsatz (27) aus gleichen Bauteilen besteht, die stirnseitig mit einer Nut-Feder-Verbindung (69), vergleichbar derjenigen bei den Filtereinsätzen (27), verbunden sind.

11. Filtervorrichtung nach einem der vorstehenden Ansprüche, **dadurch gekennzeichnet, dass** als weiterer Filtereinsatz (83; 93) im Lagenverbund ein solcher mit mindestens einem federbelasteten Bypassventil (84) zum Einsatz kommt.

12. Filtervorrichtung nach Anspruch 11, **dadurch gekennzeichnet, dass** zumindest alle Filtereinsätze (27) unter Bildung des Lagenverbundes an ihren einander benachbarten Stirnseiten miteinander verklebt sind.

13. Filtervorrichtung nach Anspruch 12, **dadurch gekennzeichnet, dass** der Lagenverbund mit den Filtereinsätzen (27) in einem Filtergehäuse (1) auswechselbar aufnehmbar ist, das einen Fluideingang (11) für Unfiltrat, einen Fluidauslass (19) für Filtrat und einen Auslass (65) für die Rückspülmenge aufweist.

## Claims

1. Filter device, in particular for the filtration of lubricating oil, consisting of at least two filter cartridges (27), in each of which a filter material (43) is accommodated, which fluid cartridges are provided with fluid passage points (37, 39) and can be stacked on top of each other to form a stacked composite and with a backflushing device (55, 57) which is arranged such that it can be moved along the inside of the filter cartridges (27),
**characterised in that**
the individual filter cartridges (27) are configured as identical parts, at least in terms of their housing;
**in that** the housing of the filter cartridges (27) has an annular body (29, 31) on each free end face;
**in that** the annular bodies (29, 31) of the housings of the filter cartridges (27) are connected to each other via inner and outer frame members (33, 35), extending longitudinally, which define window-like fluid passage points (37, 39) between them; and
**in that** the filter material (43) is accommodated in the space (41) between inner (33) and outer frame members (35).

2. Filter device according to claim 1, **characterised in that** at least one protruding annular rib (49) is present on the annular body (29) on the one free end face of a filter cartridge (27), which annular rib engages in an associated annular recess (51) in the annular body (31) on the other end face of a subsequent filter cartridge (27) to form the stacked composite.

3. Filter device according to claim 2, **characterised in that** the respective annular rib is divided into rib members (49) by at least one interruption, which forms a gap (47), and **in that** at least one protrusion (53) engaging in a gap (47) of the annular rib (49) is provided in the annular recess (51) in the subsequent filter cartridge (27) in the stacked composite.

4. Filter device according to one of the preceding claims, **characterised in that** the end faces, directed away from each other, of the filter cartridges (27) arranged in the stacked composite each have a cover part (75) which are configured as identical parts.

5. Filter device according to claim 4, **characterised in that** at least one part of the cover parts (75) is kept fluid-permeable.

6. Filter device according to one of the preceding claims, **characterised in that** the backflushing device has a motor-drivable backflush arm (57) for each filter cartridge (27), which backflush arm, configured in the manner of a slotted nozzle (61), travels along the fluid passage points (37) formed on the inner frame members (33) by means of a drive shaft (55) which, configured to be hollow, is used to discharge backflush volumes from the device.

7. Filter device according to claim 6, **characterised in that** the individual slotted nozzles (61) are offset axially and by an angle of rotation relative to each other, in such a manner that at least one slotted nozzle (61) is located above a window-like fluid passage point (37) and at least one further, preferably adjacently arranged, slotted nozzle (61) is simultaneously located above a frame member (33) next to another passage point (37).

8. Filter device according to claim 7, **characterised in that** the adjacent inner longitudinal frame members (33) have an inclined position with respect to the radial direction, so that for each passage point (37) of each filter cartridge (27) they define a flow direction which is inclined by a predefinable angle with respect to the inflow direction of the opening of the respective slotted nozzle (61).

9. Filter device according to claim 7 or 8, **characterised in that** the respective slotted nozzle (61) widens, starting from the inside of its associated filter cartridge (27), towards the hollow drive shaft (55).

10. Filter device according to one of claims 6 to 9, **characterised in that** the backflush arm (57) for each filter cartridge (27) consists of identical components which are connected on the end face with a tongue and groove joint (69), comparable to that in the filter cartridges (27).

11. Filter device according to one of the preceding claims, **characterised in that** a filter cartridge with at least one spring-loaded bypass valve (84) is used as a further filter cartridge (83; 93) in the layered composite.

12. Filter device according to claim 11, **characterised in that** at least all filter cartridges (27) are bonded to each other on their mutually adjacent end faces to form the layered composite.

13. Filter device according to claim 12, **characterised in that** the layered composite with the filter cartridges (27) can be replaceably accommodated in a filter housing (1) which has a fluid inlet (11) for unfiltered medium, a fluid outlet (19) for filtrate and an outlet (65) for the backflush volume.

## Revendications

1. Installation de filtration, en particulier pour la filtration d'une huile lubrifiante, constituée d'au moins deux inserts (27) de filtre, dans lesquels est reçue respectivement une matière (43) filtrante, qui sont pourvus de points (37, 39) de traversée de fluide et qui, en formant un composite d'empilage, peuvent être empilés les uns sur les autres, et comprenant un dispositif (55, 57) de lavage en retour, qui est disposé mobile le long de la face intérieure des inserts (27) de filtre,
**caractérisée**
**en ce que** les divers inserts (27) de filtre sont constitués, du moins du point de vue de leur enveloppe, sous la forme de parties pareilles ;
**en ce que** l'enveloppe des inserts (27) de filtre a une pièce (29, 31) annulaire de chaque côté frontal libre ;
**en ce que** les pièces (29, 31) annulaires des enveloppes des inserts (27) de filtre sont reliées entre elles par des parties (33, 35) de cadre intérieures et extérieures, s'étendant longitudinalement, qui délimitent entre elles des points (37, 39) de traversée pour du fluide du type en fenêtre ; et
**en ce que** la matière (43) filtrante est reçue dans l'espace (41) entre les parties intérieures (33) et extérieures (35) de cadre.

2. Installation de filtration suivant la revendication 1, **caractérisée en ce qu'**il y a, sur la pièce (29) annulaire de l'un des côtés frontaux libres d'un insert (27) de filtre, au moins une nervure (49) annulaire en saillie, qui pénètre, avec formation du composite d'empilage, dans un évidement (51) annulaire lui appartenant de la pièce (31) annulaire de l'autre côté frontal d'un insert (27) de filtre suivant.

3. Installation de filtration suivant la revendication 2, **caractérisée en ce que** la nervure annulaire respective est subdivisée par au moins une interruption formant une lacune (47) en des parties (49) de nervure et **en ce que**, dans l'insert (27) de filtre suivant dans le composite d'empilage, il est prévu, dans l'évidement (51) annulaire, au moins une saillie (53) pénétrant dans une lacune (47) de la nervure (49) annulaire.

4. Installation de filtration suivant l'une des revendications précédentes, **caractérisée en ce que** les côtés frontaux, non tournés l'un vers l'autre, des inserts (27) de filtre disposés dans le composite d'empilage ont chacun une partie (75) de couvercle, qui sont constitués sous la forme de parties pareilles.

5. Installation de filtration suivant la revendication 4, **caractérisée en ce qu'**au moins une partie des parties (75) de couvercle est retenue d'une manière perméable au fluide.

6. Installation de filtration suivant l'une des revendications précédentes, **caractérisée en ce que** le dispositif de lavage en retour a, pour chaque insert (27) de filtre, un bras (57) de lavage en retour, qui peut être entraîné par moteur et qui, constitué à la manière d'une buse (61) à fente, se déplace aux points (37) de traversée pour du fluide, constitués sur les parties (33) intérieures des cadres, au moyen d'un arbre (55) d'entraînement, qui, de constitution creuse, sert à l'évacuation de quantités de lavage en retour de l'installation.

7. Installation de filtration suivant la revendication 6, **caractérisée en ce que** les diverses buses (61) à fente sont décalées les unes par rapport aux autres axialement et d'un angle de rotation, de manière à ce qu'au moins une buse (61) à fente soit mise sur un point (37) de traversée pour du fluide du type en fenêtre et au moins une autre buse (61) à fente, de préférence voisine, soit en même temps sur une partie (33) du cadre à côté d'un autre point (37) de traversée.

8. Installation de filtration suivant la revendication 7, **caractérisée en ce que** les parties (33) de cadre longitudinales intérieures voisines ont, par rapport à la direction radiale, une position inclinée, de manière à ce qu'elles prescrivent, pour chaque point (37) de traversée d'un insert (27) respectif de filtre, un sens d'écoulement, qui est incliné d'un angle pouvant être donné à l'avance, par rapport à la direction d'entrée dans l'ouverture de la buse (61) à fente respective.

9. Installation de filtration suivant la revendication 7 ou 8, **caractérisée en ce que** la fente (61) à buse respective s'élargit, à partir de la face intérieure de l'insert (27) de filtre, qui peut lui être associée dans la direction de l'arbre (55) d'entraînement creux.

10. Installation de filtration suivant l'une des revendications 6 à 9, **caractérisée en ce que** le bras (57) de lavage en retour est constitué, pour chaque insert (27) de filtre, de parties de construction pareilles, qui sont reliées suivant un assemblage (69) à rainure et languette, comparable à celui dans les inserts (27) de filtre.

11. Installation de filtration suivant l'une des revendications précédentes, **caractérisée en ce que** l'on utilise, comme autre insert (83 ; 93) de filtre, dans le composite de couches, un insert ayant au moins une soupape (84) de dérivation soumise à l'action d'un ressort.

12. Installation de filtration suivant la revendication 11, **caractérisée en ce qu'**au moins tous les inserts (27) de filtre sont collés entre eux à leurs côtés frontaux voisins l'un de l'autre, avec formation du composite de couches.

13. Installation de filtration suivant la revendication 12, **caractérisée en ce que** le composite de couches peut être reçu de manière à pouvoir être remplacé avec les inserts (27) de filtre dans une enveloppe (1) de filtre, qui a une entrée (11) de fluide pour du non filtrat, une sortie (19) de fluide pour du filtrat et une sortie (65) pour la quantité de lavage en retour.
